# EUROPEAN PATENT APPLICATION

(11) **EP 4 357 421 A1**
(43) Date of publication of application: **24.04.2024**
(21) Application number: 22900898.2
(22) Date of filing: 30.09.2022
(51) Int. Cl.: C09D 5/02, C09D 133/04, E04F 13/02, C09D 7/61, C09D 7/65

(54) **HEAT-SHIELDING THERMAL INSULATION COATING COMPOSITION**

(30) Priority: 30.11.2021 JP 2021193969
(71) Applicant: Shimizu Corporation, Iwaki-shi, Fukushima 974-8261 (JP)
(72) Inventor: SHIMIZU, Masaaki, Iwaki-shi, Fukushima 974-8261 (JP)
(74) Representative: Weickmann & Weickmann PartmbB
(86) International application number: PCT/JP2022/036776
(87) International publication number: WO 2023/100464

(57) **Abstract**

The present invention provides a heat shielding and insulating paint composition capable of forming a paint film having sufficient adhesion to a substrate and an excellent heat shielding and insulating property. The heat shielding and insulating paint composition comprises an aqueous emulsion of an acrylic ester-methacrylic ester-styrene copolymer or an acrylic ester-styrene copolymer in a range of 35 to 50% by mass, rutile-type titanium dioxide in a range of 20 to 30% by mass, and hollow acrylic beads in a range of 5 to 20% by mass, with respect to a total amount of the paint composition.

## Description

### Technical Field

The present invention relates to a heat shielding and insulating paint composition.

### Background Art

Conventionally, as heat insulating paint compositions that are applied to surfaces of exterior or interior walls of a house to form a heat insulating paint film, those containing rutile-type titanium dioxide and hollow acrylic beads in an acrylic resin of a binder are known, and furthermore, those using a styrene-alkyl acrylate copolymer or a butyl acrylate-styrene copolymer as the acrylic resin are known (see, e.g., Patent Literature 1).

According to Patent Literature 1, the heat insulating paint composition contains the rutile-type titanium dioxide that is excellent in solar reflectivity, and the hollow acrylic beads that are excellent in a heat insulating property, so that an excellent heat insulating property can be obtained when forming a paint film.

In addition, according to Patent Literature 1, a paint composition containing the styrene-alkyl acrylate copolymer is considered as excellent in weather resistance and water resistance when forming the paint film, as well as excellent in adhesion to a substrate, and the butyl acrylate-styrene copolymer having similar properties is considered to be allowed instead of the styrene-alkyl acrylate copolymer.

### Citation List

### Patent Literature

Patent Literature 1: Japanese Patent No. 6746609

### Summary of Invention

### Technical Problem

However, for the heat insulating paint composition using the styrene-alkyl acrylate copolymer or the butyl acrylate-styrene copolymer as the acrylic resin, in order to obtain sufficient adhesion to the substrate when forming the paint film, an amount of the acrylic resin blended with respect to a total amount of the paint composition must be 50% by mass or more (54.3% by mass in Example 1 of Japanese Patent No. 6746609), so that an amount of the rutile-type titanium dioxide and the hollow acrylic beads blended with respect to a solid content of the acrylic resin in the paint composition becomes relatively small, and there is an inconvenience that it does not become possible to obtain a sufficient heat shielding and insulating property when forming the paint film.

On the other hand, in the heat insulating paint composition, in order to improve the heat shielding and insulating property of the paint film when forming the paint film, it must increase the amount of the rutile-type titanium dioxide and the hollow acrylic beads blended with respect to the solid content of the acrylic resin, but this will result in a relatively small amount of the styrene-alkyl acrylate copolymer or the butyl acrylate-styrene copolymer blended in the paint composition, and there is an inconvenience that it does not become possible to obtain sufficient adhesion to the substrate when forming the paint film.

An objective of the present invention is to eliminate such inconveniences and to provide a heat shielding and insulating paint composition that can form a paint film having sufficient adhesion to a substrate and an excellent heat shielding and insulating property.

### Solution to Problem

In order to achieve this objective, the heat shielding and insulating paint composition of the present invention is a heat shielding and insulating paint composition comprising an aqueous emulsion of an acrylic ester-methacrylic ester-styrene copolymer, rutile-type titanium dioxide, and hollow acrylic beads; wherein the heat shielding and insulating paint composition comprises the aqueous emulsion of the acrylic ester-methacrylic ester-styrene copolymer in a range of 35 to 50% by mass, the rutile-type titanium dioxide in a range of 20 to 30% by mass, and the hollow acrylic beads in a range of 5 to 20% by mass, with respect to a total amount of the paint composition; and wherein the aqueous emulsion of the acrylic ester-methacrylic ester-styrene copolymer comprises the acrylic ester-methacrylic ester-styrene copolymer in a range of 42 to 55% by mass as the solid content.

According to the heat shielding and insulating paint composition of the present invention, since it contains the aqueous emulsion of the acrylic ester-methacrylic ester-styrene copolymer as the acrylic resin, even if an amount of the aqueous emulsion of the acrylic ester-methacrylic ester-styrene copolymer blended with respect to the total amount of the paint composition is reduced, the paint film having excellent adhesion to the substrate can be formed. In addition, according to the heat shielding and insulating paint composition of the present invention, even if the amount of the aqueous emulsion of acrylic ester-methacrylic ester-styrene copolymer blended with respect to the total amount of the paint composition is reduced, the paint film having excellent adhesion to the substrate can be formed, and thus the amount of the rutile-type titanium dioxide and the hollow acrylic beads blended with respect to the total amount of the paint composition can be relatively increased, to form the paint film having excellent heat shielding and insulating property.

### Brief Description of Drawings

FIG. 1 is an illustration diagram showing a structure of an apparatus for evaluating a heat shielding and insulating property of a paint film formed by a heat shielding and insulating paint composition of the present invention.
FIG. 2 is a graph showing the heat shielding and insulating property of the paint film formed by the heat shielding and insulating paint composition of the present invention.

### Description of Embodiment

Next, an embodiment of the present invention will be described in more detail.

A heat shielding and insulating paint composition of the present embodiment comprises an aqueous emulsion of an acrylic ester-methacrylic ester-styrene copolymer in a range of 35 to 50% by mass, rutile-type titanium dioxide in a range of 20 to 30% by mass, and hollow acrylic beads in a range of 5 to 20% by mass, with respect to a total amount of the paint composition.

The heat shielding and insulating paint composition of the present embodiment can be applied to surfaces of substrates such as exterior or interior walls of a house, to form heat shielding and insulating paint films.

The aqueous emulsion of the acrylic ester-methacrylic ester-styrene copolymer comprises a range of 42 to 55% by mass, e.g., 48% by mass, of the acrylic ester-methacrylic ester-styrene copolymer, as a solid content. The acrylic ester-methacrylic ester-styrene copolymer acts as a binder in the paint film formed from the heat shielding and insulating paint composition of the present embodiment.

As the aqueous emulsion of the acrylic ester-methacrylic ester-styrene copolymer, for example, Acronal (R), YJ2716Dap (trade name) produced by BASF SE can be used.

In the heat shielding and insulating paint composition of the present embodiment, if an amount of the aqueous emulsion of the acrylic ester-methacrylic ester-styrene copolymer blended is less than 35% by mass with respect to the total amount of the paint composition, adhesion of the paint film formed from the heat shielding and insulating paint composition to the substrate will be insufficient. On the other hand, if the amount of the aqueous emulsion of the acrylic ester-methacrylic ester-styrene copolymer blended is more than 50% by mass with respect to the total amount of the paint composition, an amount of the rutile-type titanium dioxide and the hollow acrylic beads blended with respect to the total amount of the paint composition becomes relatively small, thereby being insufficient in the heat shielding and insulating property of the paint film formed from the heat shielding and insulating paint composition.

A content of the aqueous emulsion of the acrylic ester-methacrylic ester-styrene copolymer is preferably in a range of 40 to 49% by mass, more preferably in a range of 45 to 48% by mass with respect to the total amount of the heat shielding and insulating paint composition of the present embodiment.

Examples of the rutile-type titanium dioxide include infrared shielding titanium dioxide and titanium dioxide for white pigment, and both may be used together. The infrared shielding titanium dioxide includes those having, e.g., an average particle diameter in a range of 0.1 to 10 µm, preferably of 1.0 µm, and a specific gravity of 4.2, and as such infrared shielding titanium dioxide, e.g., Anatase R-38L (trade name) produced by SAKAI CHEMICAL INDUSTRY, CO., LTD., JR-1000 (trade name) produced by TAYCA CORPORATION, and TYPAQUE PFR404 (trade name) produced by ISHIHARA SANGYO KAISHA, LTD. can be used. In addition, the titanium dioxide for white pigment includes those having, e.g., an average particle diameter of 0.28 µm and a specific gravity of 4.0, and as such titanium dioxide for white pigment, e.g., TYPAQUE R930 (trade name) produced by ISHIHARA SANGYO KAISHA, LTD., Rutile STR-100n (trade name) produced by SAKAI CHEMICAL INDUSTRY, CO., LTD., and JR-603 (trade name) produced by TAYCA CORPORATION can be used.

In the heat shielding and insulating paint composition of the present embodiment, if the amount of the rutile-type titanium dioxide blended is less than 20% by mass with respect to the total amount of the heat shielding and insulating paint composition, solar reflectivity of the paint film formed from the heat shielding and insulating paint composition becomes insufficient. On the other hand, if the amount of the rutile-type titanium dioxide blended is more than 30% by mass with respect to the total amount of the heat shielding and insulating paint composition, the amount of the aqueous emulsion of the acrylic ester-methacrylic ester-styrene copolymer blended with respect to the total amount of the heat shielding and insulating paint composition becomes relatively small, thereby being insufficient in the adhesion of the paint film formed from the heat shielding and insulating paint composition to the substrate.

A content of the rutile-type titanium dioxide is preferably in a range of 21 to 30% by mass, more preferably in a range of 22 to 30% by mass, with respect to the total amount of the heat shielding and insulating paint composition of the present embodiment.

The hollow acrylic beads can include those having, e.g., an average particle diameter in a range of 0.2 to 200 µm, preferably in a range of 10 to 40 µm, and apparent specific gravity of 0.238. The hollow acrylic beads have a hydrocarbon gas incorporated such as methane, ethane, propane, or butane, of a thermal conductivity of 0.01 to 0.040 W/m·K. The hollow acrylic beads can obtain a high heat shielding and insulating property because the thermal conductivity of the hydrocarbon gas incorporated is comparable to that of dry air. As such hollow acrylic beads, e.g., ADVANCELL EM (trade name) produced by SEKISUI MATERIAL SOLUTIONS, INC., Hollow Acrylic Beads Expancel 461we20d36 (trade name) produced by Nouryon Pulp And Performance Chemicals AB, and Matsumoto Microsphere F-30E (trade name) produced by Matsumoto Yushi-Seiyaku Co., Ltd. can be used.

A content of the hollow acrylic beads is preferably in a range of 6 to 19% by mass, more preferably in a range of 7 to 18% by mass, with respect to the total amount of the heat shielding and insulating paint composition of the present embodiment.

The heat shielding and insulating paint composition of the present embodiment may further comprise other additives to the extent that they do not impair performance of the heat shielding and insulating paint film formed. Examples of the additives may include a plasticizer, a film-forming aid, an adhesion aid, a defoamer, a dispersant, a preservative, an antifreeze, a thickening agent, a rheology modifier, 25% ammonia water, calcium carbonate, and adjusting water.

As the plasticizer, e.g., BBP (trade name) produced by DAIHACHI CHEMICAL INDUSTRY CO., LTD., and LOXANOL pL5060 (trade name) produced by BASF SE can be used. As the film-forming aid, e.g., TEXANOL (trade name) produced by EASTMAN CHEMICAL COMPANY, KYOWANOL M (trade name) produced by KH Neochem Co., Ltd., and HEXY CARBITOL (trade name) produced by DOW Inc. can be used. As the defoamer, e.g., Super Bio KB (trade name) produced by Shin-Etsu Chemical Co., Ltd., ALTANA BYK-028 (trade name) produced by ALTANA AG, and FLOWLEN AC-300VF (trade name) produced by KYOEISHA CHEMICAL Co., Ltd. can be used. As the dispersant, e.g., monoglyceride produced by RIKEN VITAMIN CO., LTD., TERPLUS (trade name) produced by Otsuka Chemical Co., Ltd., and DISPARLON AQ-380 (trade name) produced by Kusumoto Chemicals, Ltd. can be used. As the preservative, e.g., DELTOP 100N (trade name) produced by Osaka Gas Chemicals Co., Ltd., and BESTSIDE 750 (trade name) produced by Nippon Soda Co., Ltd. can be used. As the anti-freeze, e.g., Guardrac (trade name) produced by Washin Chemical Industry Co., Ltd., and isopropanol produced by Japan Alcohol Trading Co., Ltd. can be used. As the thickening agent, e.g., SN-Thickener (trade name) produced by SAN NOPCO LTD., ADECA NOL UH-450VF (trade name) produced by ADECA CORPORATION, and Aron A7195 (trade name) produced by TOAGOSEI CO., LTD. can be used.

The following are Example and Comparative Example of the present invention.

### Example

### [Example 1]

In this Example, first, 450.0 to 480.0 parts by mass of the aqueous emulsion of the acrylic ester-methacrylic ester-styrene copolymer, 220.0 to 300.0 parts by mass of the infrared shielding titanium dioxide and the titanium dioxide for white pigment in total, 70.0 to 180.0 parts by mass of the hollow acrylic beads, and 40 to 260 parts by mass of the dispersant, the defoamer, the film-forming aid, the plasticizer, the preservative, the antifreeze, the thickening agent, and dilution water, in total, were mixed to be 1,000.0 parts by mass in total, to prepare the heat shielding and insulating paint composition.

In this Example, Acronal (R) YJ2716Dap (trade name, solid content of 48.0% by mass) produced by BASF SE was used as the aqueous emulsion of the acrylic ester-methacrylic ester-styrene copolymer; JR-1000 (trade name) produced by TAYCA CORPORATION was used as the infrared shielding titanium dioxide; JR-603 (trade name) produced by TAYCA CORPORATION was used as the titanium dioxide for white pigment; and Hollow Acrylic Beads Expancel 461we20d36 (trade name) produced by Nouryon Pulp And Performance Chemicals AB was used as the hollow acrylic beads.

Further, in this Example, DISPARLON AQ-380 (trade name) produced by Kusumoto Chemicals, Ltd. was used as the dispersant; ALTANA BYK-028 (trade name) produced by ALTANA AG was used as the defoamer; KYOWANOL M (trade name) produced by KH Neochem Co., Ltd. was used as the film-forming aid; LOXANOL pL5060 (trade name) produced by BASF SE was used as the plasticizer; BESTSIDE 750 (trade name) produced by Nippon Soda Co., Ltd. was used as the preservative; isopropanol produced by Japan Alcohol Trading Co., Ltd. was used as the antifreeze; and ADECA NOL UH-450VF (trade name) produced by ADECA CORPORATION was used as the thickening agent.

Next, a steel plate of 106 mm × 128 mm × 0.3 mm was used as the substrate, and the heat shielding and insulating paint composition obtained in this Example was applied to a surface of the substrate at a coating volume of 0.03 g/cm² and allowed to dry to form a heat shielding and insulating paint film of a thickness of 0.2 mm.

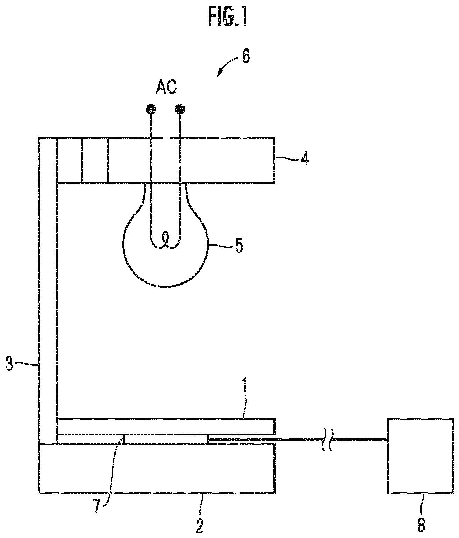

Next, using an evaluation apparatus shown in FIG. 1, the heat shielding and insulating property of the heat shielding and insulating paint film was evaluated on the substrate with the heat shielding and insulating paint film formed as a sample. The evaluation apparatus shown in FIG. 1 is equipped with a base 2 on which the sample 1 is placed, a columnar member 3 stood on the base 2, an arm member 4 extending above the base 2 from an upper end of the columnar member 3, and an indoor reflector lamp 5 suspended from the arm member 4. The indoor reflector lamp 5 is of 100 W and is connected to a commercial AC power source 6.

The sample 1 is placed on the base 2 so that the surface with the heat shielding and insulating paint film formed faces to the indoor reflector lamp 5. A temperature sensor 7 is adhered to a back surface (opposite to the surface with the heat shielding and insulating paint film formed) of the sample 1, and the temperature sensor 7 is connected to a temperature measuring device 8.

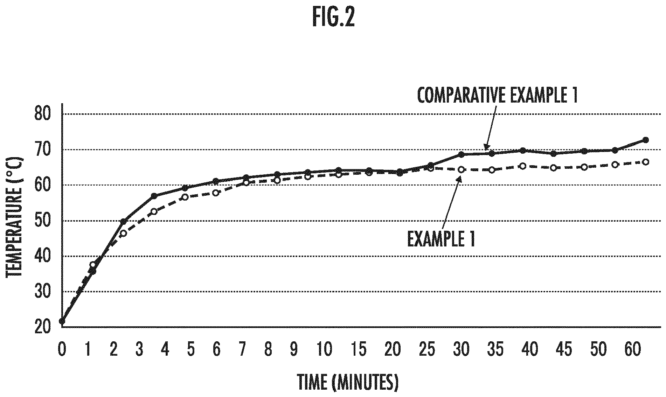

In this Example, a spacing between the sample 1 with the heat shielding and insulating paint film formed and a lower end face of the indoor reflector lamp 5 was 46 mm; the sample 1 was illuminated by the indoor reflector lamp 5; and a temperature change at the back surface of the sample 1 was continuously measured by the temperature measuring device 8. The result is shown in FIG. 2.

Next, the adhesion of the heat shielding and insulating paint film was evaluated by a pull-off method of JIS K 5600-5-7, using the substrate with the heat shielding and insulating paint film formed as a sample.

Evaluation of the adhesion of the heat shielding and insulating paint film was performed by using a test cylinder of 20 mm in diameter and at a tensile speed of 1 MPa/sec. The result is shown in Table 1.

### [Comparative Example 1]

In this Comparative Example, a heat insulating paint film was formed on a surface of the substrate in exactly the same manner as in Example 1, except that a commercially available heat insulating paint (LUMINOUSTAR (trade name) produced by SGChem Co., Ltd.) was used.

The commercially available heat insulating paint is prepared by mixing 540.0 parts by mass of styrene-alkyl acrylate copolymer, 255.0 parts by mass of infrared shielding titanium dioxide and titanium dioxide for white pigment in total, 120.0 parts by mass of hollow acrylic beads, 4.0 parts by mass of a dispersant, 4.0 parts by mass of a defoamer, 5.0 parts by mass of a plasticizer, 30.0 parts by mass of a film-forming aid, 1.0 parts by mass of a preservative, 30.0 parts by mass of an antifreeze, 3.0 parts by mass of a thickening agent, and 8.0 parts by mass of dilution water.

In the commercially available heat insulating paint, there are used the infrared shielding titanium dioxide, the titanium dioxide for white pigment, the hollow acrylic beads, the dispersant, the defoamer, the plasticizer, the film-forming aid, the preservative, the antifreeze, and the thickening agent, all of which are exactly the same as used in Example 1, except that Acronal (R) 295DNap (trade name, solid content of 50.0% by mass) produced by BASF SE is used as the styrene-alkyl acrylate copolymer.

Next, the heat insulating property and the adhesion of the heat insulating paint film were evaluated in exactly the same manner as in Example 1, except that the substrate with the paint film formed in this Comparative Example was used as a sample. The evaluation results of the heat insulating property and the adhesion of the heat insulating paint film are respectively shown in FIG. 2 and Table 1.

**[Table 1]**

| | Example 1 | Comparative Example 1 |
|---|---|---|
| Adhesion Force (MPa) | 2.37 | 1.80 |

From Table 1, according to the heat shielding and insulating paint composition of Example 1, it is apparent that more sufficient adhesion can be obtained than that of the paint film formed by the heat insulating paint composition of Comparative Example 1, to the substrate when forming the paint film, even if an amount of the acrylic resin blended is reduced with respect to the heat insulating paint composition of Comparative Example 1.

From FIG. 2, according to the heat shielding and insulating paint composition of Example 1, it is apparent that the paint film having superior heat shielding and insulating property to the paint film formed by the heat insulating paint composition of Comparative Example 1 can be formed.

### Reference Signs List

- 1: sample
- 2: base
- 3: columnar member
- 4: arm member
- 5: indoor reflector lamp
- 6: commercial AC power source
- 7: temperature sensor
- 8: temperature measuring device

## Claims

1. A heat shielding and insulating paint composition comprising an aqueous emulsion of an acrylic ester-methacrylic ester-styrene copolymer, rutile-type titanium dioxide, and hollow acrylic beads,
wherein the heat shielding and insulating paint composition comprises the aqueous emulsion of the acrylic ester-methacrylic ester-styrene copolymer in a range of 35 to 50% by mass, the rutile-type titanium dioxide in a range of 20 to 30% by mass, and the hollow acrylic beads in a range of 5 to 20% by mass, with respect to a total amount of the paint composition, and
wherein the aqueous emulsion of the acrylic ester-methacrylic ester-styrene copolymer comprises the acrylic ester-methacrylic ester-styrene copolymer in a range of 42 to 55% by mass as a solid content.
